Europäisches Patentamt

European Patent Office

Office européen des brevets

(11) Numéro de publication: 0 378 934
A1

## (12) DEMANDE DE BREVET EUROPEEN

(21) Numéro de dépôt: 89403441.2

(22) Date de dépôt: 12.12.89

(51) Int. Cl.5: G10K 11/00, G01V 1/38

(30) Priorité: 20.12.88 FR 8816813

(43) Date de publication de la demande:
25.07.90 Bulletin 90/30

(84) Etats contractants désignés:
DE GB IT

(71) Demandeur: THOMSON-CSF
51, Esplanade du Général de Gaulle
F-92800 Puteaux(FR)

(72) Inventeur: Warnan, François
THOMSON-CSF SCPI Cédex 67
F-92045 Paris la Défense(FR)
Inventeur: Penain, Alain
THOMSON-CSF SCPI Cédex 67
F-92045 Paris la Défense(FR)

(74) Mandataire: Courtellemont, Alain et al
THOMSON-CSF SCPI
F-92045 PARIS LA DEFENSE CEDEX 67(FR)

(54) Mécanisme pour l'obtention d'un mouvement de translation en milieu marin et sonar équipé d'un tel mécanisme.

(57) Le mécanisme est conçu de manière à être étanche et à donner un mouvement de translation permettant, par exemple, d'entraîner un bras articulé.

Le mécanisme comporte un circuit hydraulique avec un vérin (1) associé à un ressort de rappel (2) et une pompe (4) pour amener le vérin en position de travail (T) ; la pompe (4) est actionnée par un moteur (3). La pompe et le moteur sont entièrement disposés à l'intérieur d'une enceinte commune de manière que le moteur, avec son axe, baigne dans le fluide (F) du circuit hydraulique.

Application aux sonars pour déployer et reployer leurs antennes montées sur bras articulé.

FIG_1

## Mécanisme pour l'obtention d'un mouvement de translation en milieu marin et sonar équipé d'un tel mécanisme.

La présente invention concerne un mécanisme utilisable, en particulier, dans un sonar et conçu pour être immergé en milieu marin, généralement au bout d'un câble à des profondeurs de plusieurs centaines de mètres ; le mécanisme est prévu pour donner un mouvement de translation à une ou plusieurs pièces d'un sonar ; ce mouvement est destiné à faire pivoter un ou des bras articulés entre des positions sensiblement à 90 degrés l'une de l'autre : une position bras baissé et une position bras tendu.

De tels mécanismes sont connus dans lesquels le mouvement de translation est donné par un écrou monté dans une glissière et vissé sur une tige filetée qui constitue l'axe d'un moteur électrique. Ces mécanismes connus présentent divers inconvénients : le joint tournant placé autour de l'axe, à la sortie du bloc du moteur et nécessaire à l'étanchéité du moteur, est très difficile à réaliser et freine fortement le moteur. De plus le mécanisme fait généralement partie d'un matériel qui, après avoir été utilisé immergé avec des bras en position tendue, doit être remonté à la surface avec les bras en position baissée, grâce à un câble tiré par un treuil ; or si une panne d'alimentation électrique du moteur du mécanisme ou une panne de ce moteur survient en cours d 'utilisation du matériel, la remontée du matériel est ralentie par les bras qui ne peuvent être abaissés afin de venir se plaquer contre la paroi du corps du matériel ; les bras peuvent même être arrachés lors de la remontée.

La présente invention a pour but d'éviter ou, pour le moins, de réduire les inconvénients susmentionnés.

Ceci est atteint grâce à un mécanisme pour l'obtention d'un mouvement de translation en milieu marin, caractérisé en ce qu'il comporte un circuit hydraulique avec un vérin associé à un ressort de rappel, une réserve de fluide couplée au milieu extérieur par une paroi équipotentielle et une pompe entraînée par un moteur pour commander le vérin et en ce que la pompe et le moteur sont entièrement disposés à l'intérieur d'une enceinte commune, de manière que le moteur, avec son axe, baigne dans le fluide du circuit hydraulique.

La présente invention sera mieux comprise et d'autres caractéristiques apparaîtront à l'aide de la description ci-après et des figures s'y rapportant qui représentent :

- les figures 1 et 2, des schémas d'un mécanisme selon l'invention,
- les figures 3 et 4 des schémas partiels d'un sonar équipé d'un mécanisme selon l'invention.

Sur les différentes figures les éléments correspondants sont désignés par les mêmes repères.

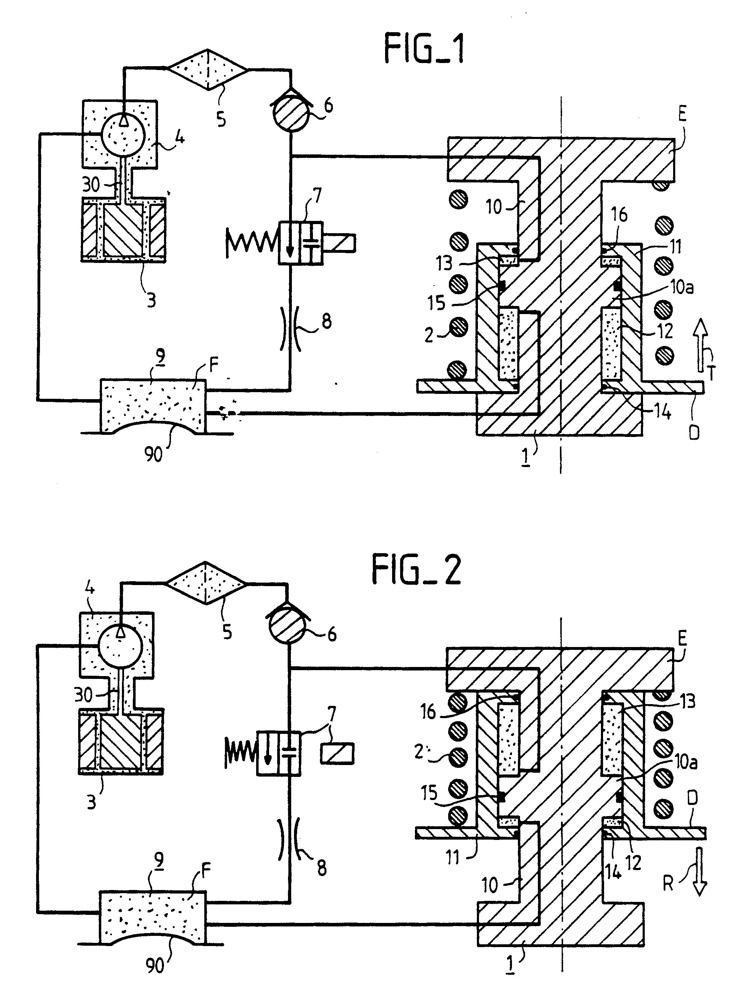

La figure 1 est le schéma de principe d'un mécanisme selon l'invention. Ce mécanisme comporte un vérin hydraulique, 1, à piston fixe, 10, et cylindre mobile 11. Le piston fixe comporte une bride à chacune de ses extrémités et un collier, 10a, en son milieu. Le cylindre 11 est formé de deux demi-coquilles assemblées autour du piston et comporte une collerette D à sa partie inférieure ; il détermine, de part et d'autre du collier 10a, deux chambres, 12, 13, dont les volumes varient en fonction de la position du cylindre. Deux conduits hydrauliques débouchent respectivement dans ces deux chambres ; celui qui débouche dans la chambre 13 provient d'une pompe hydraulique 4, à travers un filtre 5 et un clapet anti-retour 6 ; l'autre conduit relie la chambre 12 à une réserve de fluide 9 dont une paroi est constituée par une membrane souple 90. La réserve de fluide 9 est reliée directement à la pompe 4 par un conduit hydraulique. Ainsi, entre les chambres 12 et 13, est constitué un circuit série comportant successivement la réserve 9, la pompe 4, le filtre 5 et le clapet 6. En plus de ce circuit,) le montage comporte, en dérivation sur le conduit qui relie le clapet 6 à la chambre 13, un troisième conduit hydraulique qui mène jusqu'à la réserve 9 en passant successivement par une électro-vanne 7 et une restriction 8 ; il est rappelé qu'en hydraulique une restriction désigne un étranglement dans un conduit, et occasionne une résistance accrue à l'écoulement du fluide.

Un ressort hélicoïdal 2 est disposé autour du vérin, entre la bride supérieure E du piston 10 et la collerette D du cylindre 11 qu'il tend à écarter l'une de l'autre jouant ainsi le rôle de ressort de rappel pour le vérin.

Un moteur électrique 3, représenté en coupe et schématisé par une enceinte contenant un rotor entouré d'un stator, actionne la pompe 4 par son axe mécanique 30. L'ensemble pompe-moteur est réalisé, comme le montre la figure 1, de manière que leurs enceintes respectives se rejoignent pour ne former qu'une enceinte commune à l'intérieur de laquelle l'axe 30 du moteur 3 se trouve entièrement enfermé. Ainsi le problème de l'étanchéité du moteur et de la pompe vis-à-vis du milieu extérieur se trouve simplifié puisque la paroi de l'enceinte commune n'est traversée par aucun axe rotatif ; il est connu en effet que, lorsqu'un élément mobile doit traverser une paroi et que cette paroi doit être maintenue étanche, une bonne étanchéité est difficile à obtenir et entraîne, par frottement des joints d'étanchéité sur l'élément mobile, des pertes mécaniques qui peuvent absorber une partie très importante de l'énergie délivrée par le moteur.

Un fluide, F, symbolisé par des surfaces marquées de points, remplit le circuit hydraulique qui vient d'être décrit à l'aide de la figure 1. Non seulement ce fluide remplit l'enceinte, non représentée, dans laquelle est disposée l'électro-vanne 7, mais il remplit également l'enceinte commune au moteur, 3, et à la pompe, 4. Avec le montage selon la figure 1 et dans la mesure où la paroi d'un élément de ce montage est à la pression extérieure, il se trouve en équi-pression puisque le fluide F qu'il contient est, lui aussi, à la pression extérieure grâce à la paroi équipotentielle constituée par la membrane 90 de la réserve 9 ; ainsi les risques de perte de fluide du circuit hydraulique ou d'infiltration d'un liquide composant le milieu extérieur, sont très réduits.

Le montage selon la figure 1 est montré en position de repos, c'est-à-dire avec un écart maximum entre la bride E du piston 10 et la collerette D du cylindre 11 ; l'électro-vanne 7 est passante et la pompe 4 n'est pas actionnée par le moteur 3. Une flèche, T, dessinée sur la figure 1, montre le sens de la translation à faire subir au cylindre pour faire passer le montage en position de travail.

La figure 2 montre le mécanisme de la figure 1 mais, cette fois, en position de travail. Le passage de la position repos à la position travail s'est effectué avec l'électro-vanne 7 fermée comme indiqué sur la figure 2 et la pompe 4 entraînée par le moteur 3. Dans ces conditions le volume de la chambre 13 augmente par pénétration du fluide poussé par la pression de la pompe. En même temps le volume de la chambre 12 diminue de la même quantité, étant donné que les sections transversales de ces deux chambres sont identiques dans l'exemple décrit ; il en résulte un fonctionnement à volume constant de la réserve 9.

Le passage du mécanisme dans la position de travail représentée sur la figure 2 a comprimé le ressort qui ne peut pas se détendre, même lorsque le moteur 3, commandé par un détecteur de position non représenté sur les figures 1 et 2, arrête d'actionner la pompe 4 ; en effet le fluide contenu dans la chambre 13 ne peut s'en échapper en raison du clapet anti-retour 6 et de l'électro-vanne fermée. Il est à noter que l'électro-vanne, 7, du mécanisme est fermée lorsque sa bobine d'excitation est alimentée par un courant électrique de commande, et est ouverte en l'absence de courant.

Avec le mécanisme en position de travail, comme indiqué sur la figure 2, si la bobine de l'électro-vanne n'est plus excitée, l'énergie emmagasinée dans le ressort 2 entraîne le cylindre 11 dans un mouvement de translation, repéré par une flèche R, qui ramène le vérin dans l'état indiqué à la figure 1 par transfert de fluide de la chambre 13 vers la réserve 9 à travers l'électro-vanne 7 et la restriction 8 et par transfert d'une même quantité de fluide de la réserve 9 vers la chambre 12. Ainsi, que l'arrêt de la fourniture de courant à la bobine de l'électro-vanne 7 soit commandé ou soit dû à une panne d'alimentation, le mécanisme revient automatiquement au repos, c'est-à-dire dans la position selon la figure 1, grâce à la seule énergie accumulée par le ressort 2. Ce fonctionnement a été prévu pour assurer la sécurité du matériel pour lequel le mécanisme décrit a été conçu ; il s'agissait d'un sonar dont les antennes devaient pouvoir être dépliées après immersion à la profondeur d'écoute désirée et dont les antennes devaient obligatoirement être repliées avant la remontée du sonar afin d'éviter de les détériorer et surtout d'éviter de freiner la remontée du sonar.

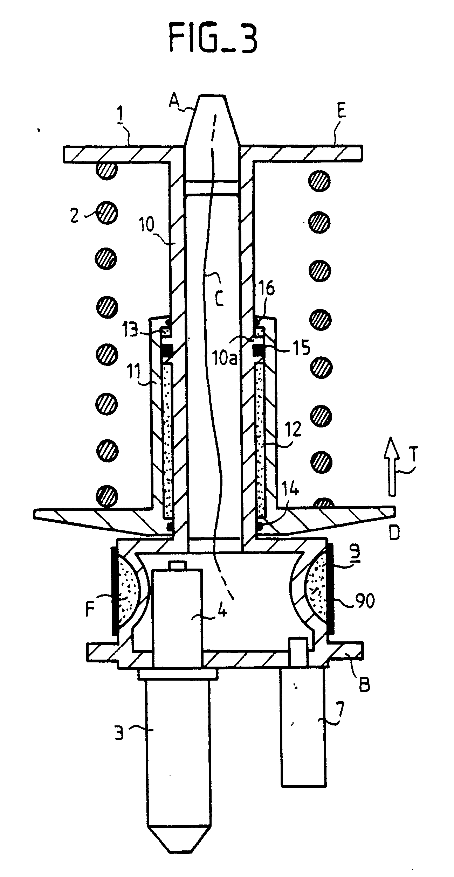

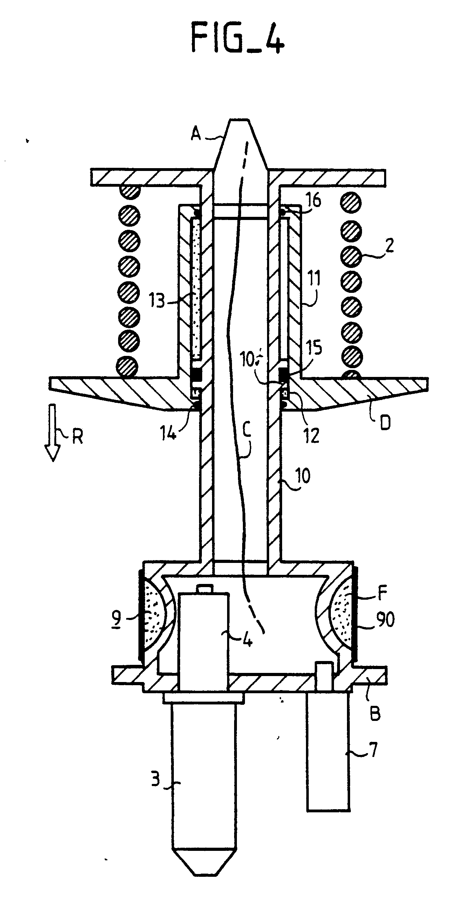

Les figures 3 et 4 sont des schémas simplifiés du mécanisme de translation tel qu'il a été réalisé pour un sonar. Ces figures, qui n'ont pour but que de rendre compte de l'aspect du mécanisme réalisé, montrent : un câble électrique C, le vérin 1 avec son ressort de rappel 2 et une anse d'accrochage A, une embase creuse, B, disposée sous le vérin et servant de support à l'ensemble composé par le moteur 3 et le vérin 4, à l'électro-vanne 7 et à la réserve de fluide 9. Le piston fixe 10 est creux et permet le passage du câble électrique C qui relie les différents circuits du sonar immergé aux circuits d'alimentation, de commande et de traitement d'information situés sur un bateau ou un hélicoptère. Selon les réalisations le câble de sustentation, qui sert à monter et descendre le sonar et qui est accroché à l'anse A, est constitué soit par le câble électrique C soit par un câble distinct du câble C.

La figure 3 correspond à la figure 1 c'est-à-dire qu'elle montre le mécanisme de translation en position de repos, tandis que la figure 4 montre, comme la figure 2, le mécanisme en position de travail avec le ressort, 2, bandé. Tout ce qui a été dit au sujet du fonctionnement de l'ensemble vérin-ressort selon les figures 1 et 2 est également valable pour l'ensemble vérin-ressort selon les figures 3 et 4.

Les figures 3 et 4 correspondent à une réalisation où la course du vérin est de 50 mm entre les positions de repos et de travail et où le moteur 3 est un moteur à courant continu.

Il est à noter que le liquide du circuit hydraulique de la réalisation selon les figures 3 et 4, est du kérosène. Le kérosène est très fluide et ses propriétés physiques, y compris sa viscosité, sont stables en température ; cependant il n'est pas utilisé habituellement comme liquide de circuit hydraulique car son pouvoir lubrifiant est faible. De même il n'est pas habituel de faire fonctionner un

5       EP 0 378 934 A1       6

moteur à courant continu dans un liquide lubrifiant car les commutations électriques au niveau des balais ont tendance à provoquer des arcs électriques à travers le film de liquide entraîné et c'est pourquoi la solution classique consiste à utiliser un moteur triphasé mais, dans l'application considérée cette solution était à rejeter pour des problèmes de fourniture d'une alimentation triphasée. L'emploi de kérosène, très fluide, permet d'éviter ce défaut des moteurs à courant continu ; son pouvoir lubrifiant plus faible que les graisses habituellement utilisées pour lubrifier les axes des moteurs, est, certes, la cause d'une usure plus rapide mais, dans l'application considérée, le moteur 3 n'étant que très peu sollicité sa durée de vie reste grande devant la durée de fonctionnement attendue du matériel : en général un ou deux fonctionnements de quelques secondes à chaque immersion du sonar.

La présente invention n'est pas limitée aux exemples décrits ; elle concerne d'une façon plus générale l'obtention d'un mouvement de translation à partir d'un vérin associé à un ressort de rappel et commandé par une pompe entraînée par un moteur dont l'intérieur fait partie du circuit hydraulique du vérin c'est-à-dire est immergé dans le liquide du circuit hydraulique.

C'est ainsi, par exemple, que le vérin pourrait être à cylindre fixe et piston mobile, l'accrochage du sonar à son câble de sustentation se faisant alors au niveau du cylindre ; le vérin peut même ne comporter qu'une seule chambre ou comporter deux chambres qui ne soient pas égales mais alors la réserve de fluide ne travaille plus à volume constant.

## Revendications

1. Mécanisme pour l'obtention d'un mouvement de translation en milieu marin, caractérisé en ce qu'il comporte un circuit hydraulique avec un vérin (1) associé à un ressort de rappel (2), une réserve (9) de fluide (F) couplée au milieu extérieur par une paroi équipotentielle (90) et une pompe (4) entraînée par un moteur (3) pour commander le vérin et en ce que la pompe et le moteur sont entièrement disposés à l'intérieur d'une enceinte commune, de manière que le moteur, avec son axe, baigne dans le fluide du circuit hydraulique.

2. Mécanisme selon la revendication 1, caractérisé en ce que le vérin (1) est à deux chambres de dimensions égales (12, 13), de manière que la réserve (9) contienne un volume de fluide (F) constant.

3. Mécanisme selon l'une quelconque des revendications précédentes, caractérisé en ce que le vérin (1) est à cylindre (11) mobile et à piston fixe (10) et en ce que le piston est traversé longitudinalement par un trou qui débouche aux deux extrémités du piston.

4. Mécanisme selon la revendication 1, caractérisé en ce que le moteur (3) est un moteur continu et en ce que le fluide (F) est du kérosène.

5. Sonar caractérisé en ce qu'il est équipé d'un mécanisme selon l'une quelconque des revendications précédentes.

4

FIG_1

FIG_2

# FIG_3

# FIG_4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 518 506 (BENDIX CORP.)<br>* Revendication 1; figures 1,2 *<br>--- | 1,5 | G 10 K 11/00<br>G 01 V 1/38 |
| A | EP-A-0 218 358 (PETROPHYSICAL SERVICES)<br>* Résumé; figures 1,2 *<br>--- | 1 | |
| A | US-A-3 273 645 (DER MOTT)<br>* Colonne 7, lignes 12-16; figures 3,6b *<br>--- | 1 | |
| A | US-A-3 002 564 (BAKER)<br>* Colonne 6, lignes 17-30; figures 1-3 *<br>----- | 1 | |

**DOMAINES TECHNIQUES RECHERCHES (Int. Cl.5)**

G 10 K
G 01 V
E 21 B

Le présent rapport a été établi pour toutes les revendications

| Lieu de la recherche | Date d'achèvement de la recherche | Examinateur |
|---|---|---|
| LA HAYE | 26-03-1990 | ANDERSON A.TH. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)